# EUROPEAN PATENT SPECIFICATION

(11) **EP 2 643 604 B1**
(45) Date of publication and mention of the grant of the patent: **16.11.2016**
(21) Application number: 11811009.7
(22) Date of filing: 24.11.2011
(51) Int. Cl.: F16C 33/74

(54) **BEARING WITH INTEGRATED SEALS**
LAGER MIT INTEGRIERTEN DICHTUNGEN
COUSSINETS AVEC ÉLÉMENTS D'ÉTANCHÉITÉ INTÉGRÉS

(30) Priority: 24.11.2010 GB 201019935
(43) Date of publication of application: 02.10.2013
(73) Proprietor: Mahle International GmbH, 70376 Stuttgart (DE); Mahle Metal Leve S/A, 13210-877 Jundiaí, SP (BR); Mahle Composants Moteur France SAS, 74650 Chavanod (FR)
(72) Inventor: UEHARA, Samantha, CEP-02256-070 Sao Paulo SP (BR); SARABANDA, Jose, Valentin, CEP-05621-010 Sao Paulo SP (BR); BEAUREPAIRE, Olivier, F-74150 Rumilly (FR)
(74) Representative: BRP Renaud & Partner mbB Rechtsanwälte Patentanwälte Steuerberater
(86) International application number: PCT/EP2011/005904
(87) International publication number: WO 2012/069191

(56) References cited:
- CH-A- 304 821
- DE-A1-102008 039 740
- US-A- 6 082 904
- US-A1- 2002 061 146
- US-A1- 2002 085 779
- US-A1- 2005 213 859

## Description

The present invention relates to bearings, more particularly to bearings that enable an engine to operate with a lower volume flow rate of oil.

### BACKGROUND

Internal combustion engines are generally provided with an oil pump which has the capability of providing a much greater volume flow of oil than is needed under certain engine operating conditions. High oil pumping capacity is provided to supply the bearings of an engine with sufficient oil flow and pressure at engine idling speeds. However, when the engine is operating at normal vehicle operating speeds, only about 10 to 25% of the oil pump's potential capacity may be utilised. The need to run oil pumps having greater capacity than is required for most of the engine's operating life has several disadvantages including: much energy being wasted by the pump being physically too large and consuming too much engine power to drive it; the oil pump being unnecessarily heavy; at higher engine speeds the pump provides too much oil pressure and the majority of the oil flow is diverted straight back into the engine sump via the oil pressure relief overflow valve without ever passing through the bearings.

The reasons for engines having such large oil pumps is to a significant extent due to the design of bearings employed in the engines. As the oil is pumped into the clearance between the bearing surface and the rotating crankshaft journal, running within the bearing, it escapes through the axial edges of the clearance, reducing oil pressure within the clearance, and requiring a substantial flow rate of oil to be pumped into the clearance to maintain the oil pressure within the clearance.

DE102008039740 A1 describes a half bearing according to the preamble of claim 1.

US20060263000 describes a bearing in which seals are supported within grooves in a bearing shell such that they are pressed against a crankshaft by a spring or oil pressure. Disadvantageously, such an arrangement is complex and expensive to manufacture and assemble, and requires a large inventory stock of parts by suppliers and customers. Further, such an arrangement is sizable and substantially reduces the useable surface area of the bearing surface that mates to the crankshaft, with increased localised wear reducing component lifetime and reliability.

US201000544639 describes a bearing in which a galvanic or sputtered coating is provided across the entire bearing surface, and has wide circumferential seals formed either by profiling the coating or by profiling the underlying layer onto which the coating is deposited. Disadvantageously, such a metallic tri-layer structure is complex to manufacture. Further, it is relatively inflexible and does not provide reliable sealing that compensates for manufacturing variances and misalignment between the crankshaft journal and the bearing.

### BRIEF SUMMARY OF THE DISCLOSURE

According to a first aspect of the invention, there is provided a half bearing comprising a bearing member having at least an internal bearing lining layer with an optional bearing overlay layer defining a concave inner face extending between first and second axial ends of the half bearing, wherein the concave inner face comprises a concave substantially semi-cylindrical bearing surface and at least first and second micro-profiled seal regions that each comprise a plurality of seal ridges, wherein the first and second micro-profiled seal regions are at or adjacent to the first and second axial ends, and peaks of the seal ridges project above the concave bearing surface and the micro-profiled seal regions extend at least partially circumferentially across the concave inner face, wherein the seal ridges have a repeat period of 300 to 700 µm, a ridge height of 12 to 30 µm and that each micro-profiled seal region has a width of 200 to 600 µm.

According to a second aspect of the invention, there is provided a 360° engine bearing assembly comprising a first half bearing as described in the first aspect of the invention and a second half bearing, wherein the first half bearing is retained in an engine block main bearing housing and the second half bearing is retained in a main bearing cap housing.

According to a third aspect of the invention, there is provided a method of manufacturing a half bearing according to the first aspect of the invention whereby the micro-profiles are formed by machining with a boring tool or by tapping using a thread-cutting tapping tool or by etching through a lithographic mask or by deposition of a micro-profile layer and lift-off with a lithographic mask.

The peaks of the micro-profiled seal regions are raised above the level of the concave bearing surface of the half bearing (i.e. closer to the axis of the half bearing), which is hollow and generally semi-cylindrical. The bearing member may comprise circumferential raised regions of the inner face, with the micro-profiled seal regions being provided on the raised regions.

The bearing member has joint faces and the micro-profiled seal regions (and any raised regions) may extend around substantially the whole of the concave inner face between the joint faces. The micro-profiled seal regions may project above the bearing surface by a greater extent in regions at or adjacent the joint faces than in a region spaced front the joint faces. Alternatively, micro-profiled seal regions (and any raised regions) may extend around a portion of the concave inner face spaced from the joint faces. In a further alternative, the micro-profiled seal regions may extend around a portion of the concave inner face terminating adjacent to the joint faces.

The concave inner face may be provided with at least one further micro-profiled seal region intermediate the first and second micro-profiled seal regions.

The seal ridges of each micro-profiled seal region may be arranged without any gaps between adjacent ridges (i.e. the intervening valley bottom is V-shaped). The micro-profiled seal regions comprise seal ridges having a repeat period of 300 to 700 µm a ridge height of 12 to 30 µm and each micro-profiled seal region has a width of 200 to 600 µm.

The pattern of seal ridges of the micro-profiled seal regions may be a repeating pattern of ridges. Alternatively, the micro-profiled seal regions may each comprise seal ridges having a monotonic variation in height across the region.

The micro-profiled seal regions may comprise seal ridges with intervening seal valleys, and bottoms of the seal valleys are level with the bearing surface. The micro-profiled seal regions may comprise seal ridges with intervening seal valleys, and bottoms of the seal valleys are above the level of the bearing surface. The micro-profiled seal regions may comprise seal ridges with intervening seal valleys, and bottoms of the seal valleys having increasing height above the level of the bearing surface with increasing distance from the bearing surface.

The bearing surface may be a smooth bearing surface (i.e. provided with a substantially smooth finish, without any micro-profiling). The bearing surface may be a micro-profiled bearing surface comprising a micro-profiled bearing surface region having a plurality of bearing surface ridges, and the peaks of the seal ridges project above the peaks of the bearing surface ridges. The micro-profiled bearing region may comprise a pattern of bearing surface ridges having a repeat period of 100 to 750µm, and preferably 200 to 500µm. The micro-profiled bearing regions may comprise a pattern of bearing surface ridges having a ridge height of 2 to 12µm, and preferably 2 to 5µm. The pattern of bearing surface ridges of the micro-profiled bearing region may be a repeating pattern of ridges.

The micro-profiled regions may comprise a repeating pattern of circumferential ridges. The micro-profiled regions may comprise a repeating pattern of helically arranged ridges.

An oil supply hole may be provided in the inner face, being located intermediate the first and second micro-profiled seal regions. An oil distribution groove may be provided in the bearing surface, being located intermediate the micro-profiled seal regions.

The micro-profiles are formed by machining with a boring tool or by tapping using a thread-cutting tapping tool or by etching through a lithographic mask or by deposition of a micro-profile layer and lift-off with a lithographic mask.

The micro-profiled regions may be formed in a micro-profile layer deposited on the bearing surface.

The bearing member may have an external backing layer.

In a 360° engine bearing assembly, the second half bearing may be a plain half bearing. Alternatively, the second half bearing may be a half bearing having micro-profiled seal regions.

In an internal combustion engine, the second half bearing may be a plain half bearing. Alternatively, the second half bearing may be a half bearing having micro-profiled seal regions.

The method may comprise forming circumferential raised regions of the bearing lining layer, and forming the micro-profiled seal regions on the raised regions.

### BRIEF DESCRIPTION OF THE DRAWINGS

Embodiments of the invention are further described hereinafter with reference to the accompanying drawings, in which:
- Figure 1 shows a perspective view of a half bearing according to a first embodiment of the present invention;
- Figure 2A shows a cross-sectional view of the half bearing of Figure 1;
- Figure 2B shows a cross-sectional view of a further half bearing of the present invention;
- Figure 3 shows a side view of the half bearing of Figure 1;
- Figure 4 shows a perspective view of a half bearing according to a second embodiment of the present invention;
- Figure 5 shows the half bearing of Figures 1 assembled in the engine block housing of a main bearing together with a plain half bearing installed in the main bearing cap housing and a crankshaft main bearing journal;
- Figure 6 shows a transverse cross-sectional view through the bearing assembly of Figure 5;
- Figure 7 shows a cross-sectional view of a half bearing according to a third embodiment of the present invention;
- Figure 8 shows a cross-sectional view of an alternative half bearing; and
- Figure 9 shows a cross-sectional view of another alternative half bearing.

### DETAILED DESCRIPTION

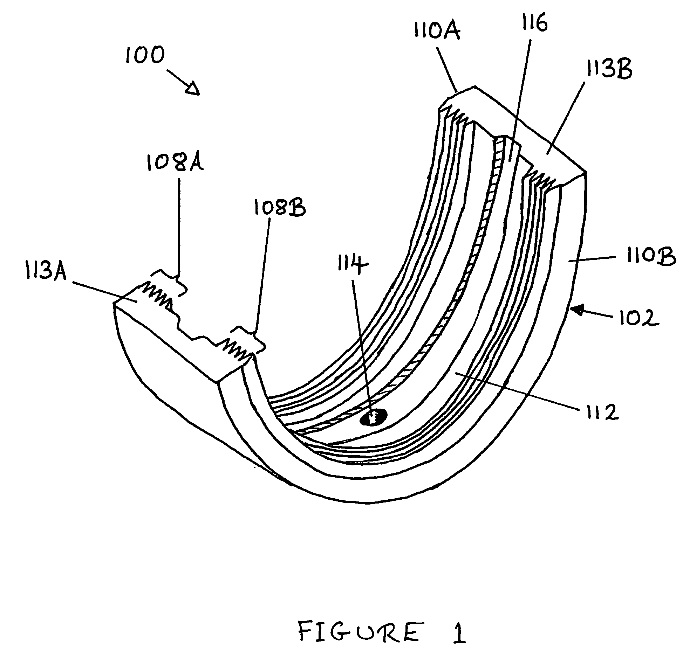

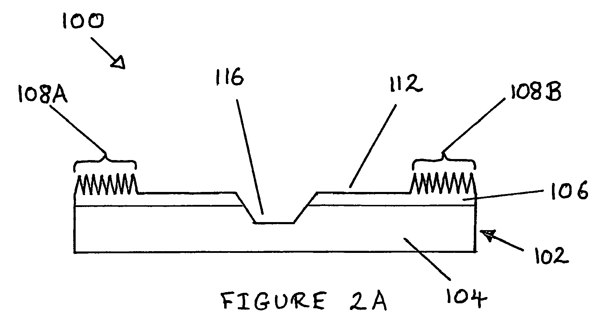

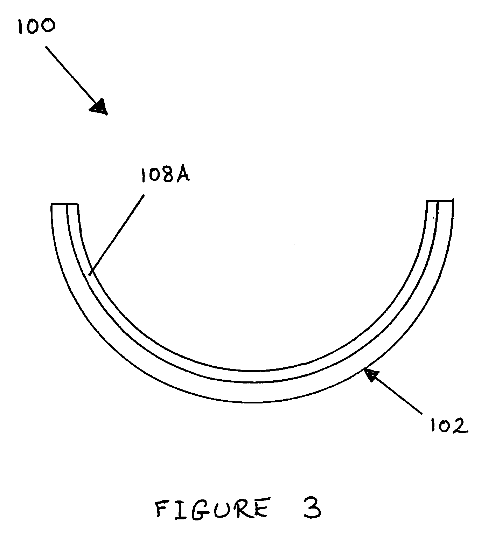

Referring now to Figures 1, 2A and 3 of the drawings, where the same features are denoted by common reference numerals. A first embodiment of a half bearing according to the present invention is shown at 100. The half bearing 100 is substantially semi-cylindrical, being in the shape of half of a right cylindrical length of tube that was bisected along its axis. Figure 2A shows a cross-sectional view through the half bearing 100 of Figure 1, coplanar with the axis of the half bearing. Figure 3 shows a side view of the half bearing 100 of Figure 1, along the direction of the axis of the half bearing.
The half bearing 100 comprises a bearing member 102 having a strong external backing layer of steel 104 (but which could be bronze material for example) and an internal bearing lining layer 106 of a suitable bearing alloy, which may, for example, be aluminium-based or copper-based, in known manner. The bearing lining layer 106 may be provided with an overlay coating (not shown) if appropriate, in known manner. The inner face (i.e. the interior side) of the half bearing 100 has first and second micro-profiled seal regions 108A and 108B, provided on or as part of the bearing lining layer 106 at or adjacent the first and second axial ends 110A and 110B of the half bearing 100. The bearing member 102 has a bearing surface 112 between the first and second micro-profiled seal regions 108A and 108B. The bearing member 102 is optionally provided with an oil supply hole 114 connecting to a circumferential oil distribution groove 116 within the bearing surface 112. The bearing surface 112 comprises a greater proportion of the inner face of the half bearing 100 than the micro-profiled seal regions 108A and 108B. The bearing member 102 has joint faces 113A and 113B, which locate with corresponding joint faces of a further half bearing to form a 360° bearing assembly.

The first and second micro-profiled seal regions 108A and 108B each comprise a plurality of substantially circumferential seal ridges that project above (i.e. towards the axis of the half bearing) the level of the bearing surface 112 of the inner face of the bearing lining layer 106. The micro-profiled seal regions 108A and 108B are machined from corresponding regions that project above the bearing surface 112. The seal ridges of each micro-profiled seal region 108A and 108B form a repeating pattern having a pitch of 300 to 700µm and height of 12 to 30µm.

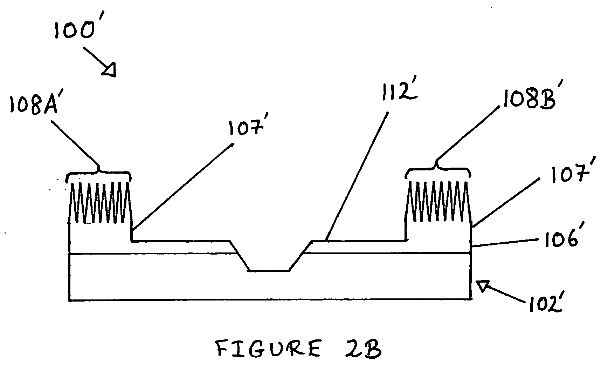

In the embodiment depicted in Figures 1 and 2A, the micro-profiled seal regions 108A and 108B are formed on the half bearing such that the valleys between the ridges of the micro-profiled seal regions are level with the adjacent bearing surface 112, and the seal ridges project above the level of the bearing surface (i.e. at least the peaks of the seal ridges are above the level of the bearing surface). However, in an alternative arrangement, illustrated in Figure 2B, the bearing member 102' comprises circumferential raised regions 107' of the bearing layer 106' that are raised above the level of the bearing surface 112', with the micro-profiled seal regions 108A' and 108B' provided on the raised regions, such that the valley bottoms between the seal ridges are above the bearing surface (i.e. they are closer to the axis of the half bearing, e.g. they lie within a cylindrical surface that is concentric with the bearing surface and having a smaller radius).

In the embodiment depicted in Figure 1, the peaks and valleys of the seal ridges of the micro-profiled regions 108A and 108B are each in a plane perpendicular to the axis of the half-cylindrical bearing member. Alternatively, the peaks and valleys may be non-planar. For example, the peaks of the circumferential ridges of the micro-profiles may define parts of a helix, centred about the axis of the semi-cylindrical bearing member. Such arrangements would enable the micro-profiles to be formed by machining the bearing half with a suitable boring tool or thread-cutting tapping tool. Conveniently, a pair of corresponding bearing halves may be connected together, and a common helical pattern of micro-profiles may be simultaneously tapped into corresponding regions that project above (i.e. towards the axis of) their bearing surfaces.

Instead of machining the micro-profiled regions, they may be formed by an etching process, following the deposition of a patterned lithographic mask. For example projecting regions of the bearing member may be coated with a photosensitive chemical (e.g. a "photoresist", such as polymethyl methacrylate - PMMA), exposed to an optical interference pattern and developed to produce a mask of lines and gaps, the underlying bearing member is etched through the gaps, chemically or with an ion plasma, and the mask is washed away to leave a corresponding pattern of ridges and valleys etched into the projecting regions.

In a further alternative, the micro-profiled regions may be formed in a further layer of material, which has been patterned by a deposition and lift-off process using a complementarily patterned lithographic mask. For example, a coating seal material is deposited over a lithographic mask, such that when the mask is washed away with solvent, the regions of coating deposited on the mask are 'lifted-off', leaving behind a patterned micro-profile, with ridges having been formed in the gaps between lines of the mask.

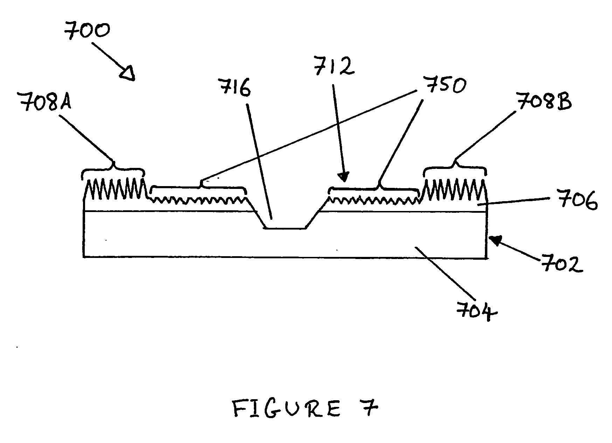

In further embodiments of the invention like features are identified with like numerals, incremented by an integer multiple of 100. For example the micro-profiled seal regions 708A and 708B of Figure 7 correspond with the micro-profiled seal regions 108A and 108B of Figure 1.

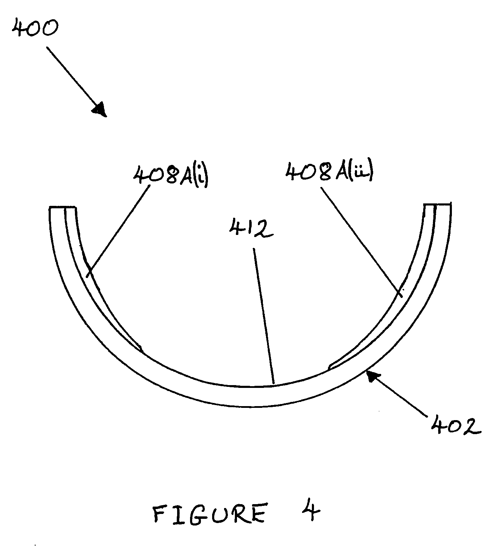

In Figure 1, the micro-profiled seal regions 108A and 108B are shown present along the entire circumference of the inner face of the half bearing, between the joint faces 113A and 113B. However, alternatively, the micro-profiled seal regions may be provided only along part of the circumference of the inner face. For example, the micro-profiled regions may be centrally located along the circumference of the inner face, between the joint faces. Alternatively, as is illustrated in the second embodiment of half bearing 400 of the present invention in Figure 4, lengths of the micro-profiled seal regions 408A(i) and 408A(ii) may be provided, along the circumferences of the concave inner face at or adjacent the axial ends, ending at the joint faces, with an intervening region of the inner face within which micro-profiled seal regions are not provided. In a further alternative, portions of the micro-profiled seal regions adjacent the joint faces project further above the adjacent bearing surface than portions spaced from the joint faces.

Such alternative arrangements may be advantageous in the case that the half bearing has a feature known as joint face crush relief, in which a larger clearance is provided between the bearing running surface and the co-operating shaft journal surface at the region where the circumferential ends of two 180° half bearings meet to form a full 360° bearing assembly about a crankshaft journal. When assembled in a housing, a joint face crush relief region of a half bearing (i.e. a 180° bearing element) may provide a region of increased clearance, typically of about 5° to 15°. Accordingly, a 360° bearing assembly in which a crush relief region is provided at each circumferential end of a pair of half bearings may comprise 20° to 60° of increased clearance. Crush relief regions typically provide a wider path for oil pumped through the bearings to be expelled back into the sump than the other regions of the clearance, and accordingly by the provision of micro-profiled seal regions on one or both bearing halves of a 360° bearing assembly the flow of oil through the crush relief regions may be reduced.

The operation of the half bearing 400 of the second embodiment is substantially the same as that of the half bearing 100 of the first embodiment. Accordingly, advantages of the first embodiment are also provided by the second embodiment.

In Figure 1, two micro-profiled seal regions 108A and 108B are shown, each of which is at an axial end 110A and 110B of the half bearing 100. However, further micro-profiled seal regions may be provided in other regions of the inner face, spaced from the axial ends 110A and 110B, to further control oil flow in operation. For example, third and fourth micro-profiled seal regions may be provided between the first and second micro-profiled seal regions, for example with the four micro-profiled seal regions being evenly separated across the inner face of the half bearing, between the axial ends.

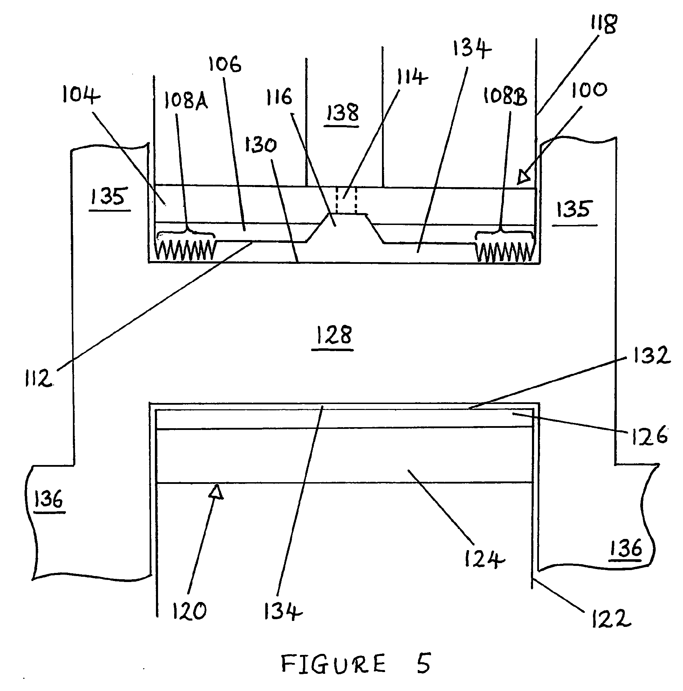

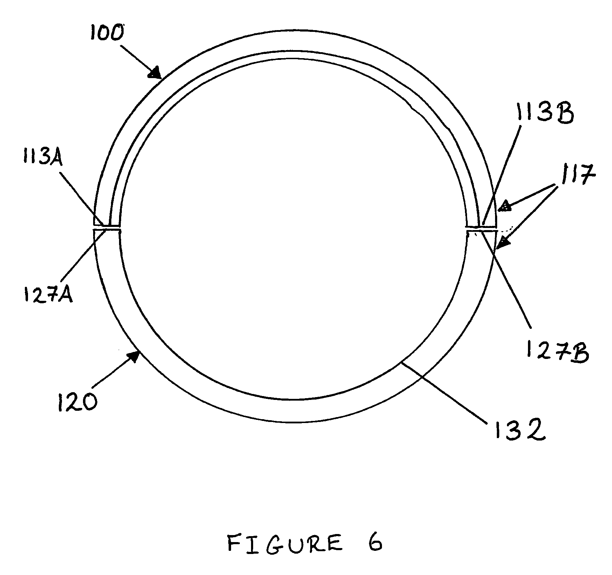

Referring now to Figures 5 and 6, Figure 5 shows an internal combustion engine assembly comprising a composite 360 bearing assembly, and Figure 6 shows such a composite 360° bearing assembly, in which identical features to those depicted in Figures 1, 2A and 3 are identified with the same numerals. The half bearing 100 of the embodiment of Figure 1 and a plain second half bearing 120 are assembled into a composite 360° bearing assembly 117, in which the half bearing 100 is shown installed in the engine block main bearing housing 118 of an internal combustion engine, and a plain second half bearing 120 is shown installed in the main bearing cap 122 half of the housing. Figure 5 shows a cross-sectional view coplanar with the axis of rotation of the crankshaft journal rotating within the bearing halves, and Figure 6 shows a corresponding cross-sectional view of the composite 360° bearing assembly perpendicular to the axis of rotation of the crank shaft. The plain second half bearing 120 has a strong external backing layer of steel (but which could be bronze material for example) and an internal bearing lining layer of a suitable bearing alloy, which may, for example, be aluminium-based or copper-based in known manner. The plain second half bearing 120 has joint faces 127A and 127B that locate with joint faces 113A and 113B of the first half member 100 to form the 360° bearing assembly 117. The plain second half bearing 120 is a conventional bearing and has joint face relief regions (not shown) in the known manner. The two bearing halves 100 and 120 are assembled about a crankshaft journal 128 having a running surface 130 that co-operates with the inner faces of the two half bearings 100 and 120, and the journal rotates about its axis. There is a clearance 134 provided between the running surface 130 and the bearing surfaces 112 and 132. The crankshaft has web portions 135 on the ends of the journal 128 in known manner and the web portions have big end journals 136 supported thereon. The big end journals 136 support connecting rods and pistons (both not shown) in known manner. The main bearing housing 118 in the engine block is provided with an oil gallery 138 to supply oil under pressure from an associated oil pump (not shown) to the oil supply hole 114 and the oil distribution groove 116.

In operation, the micro-profiled seal regions 108A and 108B co-operate with the running surface 130 of the rotating crankshaft journal 128. Oil is supplied under pressure from the engine oil pump to the oil gallery 138 and thence to the oil supply hole 114. The oil distribution groove 116 receives oil from the oil hole 114, which spreads into the clearance 134 under pressure. Accordingly there is always an oil film in the clearance 134 between the running surface 130 of the crankshaft journal 128 and the bearing surfaces 112 and 132. The distribution of the oil within the oil distribution groove 116 is assisted by the viscous drag of the rotating crankshaft journal 128, the oil spreading axially across throughout the clearance 134 therefrom. The micro-profiled seal regions 108A and 108B reduce the egress of oil out from within the clearance 134, reducing flow and maintaining a higher oil pressure within the clearance.

Alternatively, the 360° bearing assembly of Figure 6 and the internal combustion engine assembly of Figure 5 may comprise two half bearings both having micro-profiled seal regions according to the present invention. Advantageously, such an arrangement may provide further confinement of oil within the clearance between the bearing halves of the bearing assembly and the crankshaft journal.

The micro-profiled seal regions are formed having ridges of a narrower bore than required for operation with a particular crankshaft journal, such that the bearing half provides an 'adaptive' seal, in which the peaks of the ridges of the micro-profiled seal regions are worn away in initial operation of the crankshaft journal. Accordingly, the micro-profiled seal regions of the half bearing uniquely adapt to manufacturing tolerances and assembly misalignment of the engine to provide high performance seals.

During use, engines release particulate, particularly metal particulate, into the engine lubrication oil, which increases engine wear. Bearing surfaces are known to be provided with a surface layer that is softer than the underlying structure, such that particulate can embed into the surface and reduce the abrasive effect of free particulate between cooperating surfaces. The micro-profiled regions of the present invention are able to entrap particulate in the valleys between ridges of the micro-profiled seal regions, helping to reduce or avoid seizure of the bearing due to accumulated particulate matter.

Referring now to Figure 7, where a third embodiment of a half bearing 700 according to the present invention is shown, in cross-sectional view. In this third embodiment, the half bearing 700 is similar to that of the half bearing 100, and like features have been identified with like numerals, incremented by 600.

The half bearing comprises a bearing member 702 having a strong external backing layer of steel 704 (but which could be bronze material for example) and an internal bearing lining layer 706 of a suitable bearing alloy, which may, for example, be aluminium-based or copper-based in known manner. The bearing lining layer 706 may be provided with an overlay coating (not shown) if appropriate in known manner.

In contrast to the half bearing 100 of Figure 1 where the semi-cylindrical bearing surface 112 is substantially smooth, the half bearing 700 of Figure 7 differs in that the bearing surface 712 of the bearing lining layer 706 is a micro-profiled bearing surface comprising micro-profiled bearing surface regions 750. The micro-profiled bearing surface regions 750 each comprise a plurality of substantially circumferential bearing surface ridges having peaks and intervening valleys. The micro-profiled bearing surface region 750 is machined into the bearing surface 712 of the bearing lining layer 706. The bearing surface ridges of the micro-profiled bearing surface region 750 have a smaller height (i.e. in the radial direction between their successive valleys and peaks) than the seal ridges of the micro-profiled seal regions 708A and 708B, and are preferably less than half the height of the seal ridges. The bearing surface ridges of the micro-profiled bearing surface region 750 form a repeating pattern having a pitch of 200 to 500µm and height of 2 to 5µm. The micro-profiled bearing surface region 750 may be formed by any of the same methods as the micro-profiled seal regions 708A and 708B.

The peaks of the seal ridges are above the peaks of the bearing surface ridges (i.e. the radius of the circumferential peaks of the bearing surface ridges of the micro-profiled bearing surface region 750, with respect to the axis of the substantially semi-cylindrical half bearing 700, is greater than the radius of the peaks of the seal ridges of the micro-profiled seal regions 708A and 708B). Accordingly the peaks of the micro-profiled bearing surface region 750 are separated from a cooperating crankshaft journal by a greater extent than the peaks of the micro-profiled seal regions 708A and 708B. In Figure 7 the pitches of the ridges of the micro-profiled bearing regions 750 and the micro-profiled regions 708A and 708B are the same, although it will be appreciated that alternatively their pitches may be different.

In operation, the micro-profiled bearing regions 750 provide a further reduction in the axial flow rate of oil within the clearance between the bearing half and the contained rotating crankshaft journal. Further, the micro-profiled bearing surface region provides improved hydrodynamic lubrication and an adaptive surface, such that the bearing surface can be worn to conform to the shape of the bearing journal in localised areas of contact. Advantageously a micro-profiled bearing surface region provides higher seizure resistance, lower running temperature and higher load carrying capability.

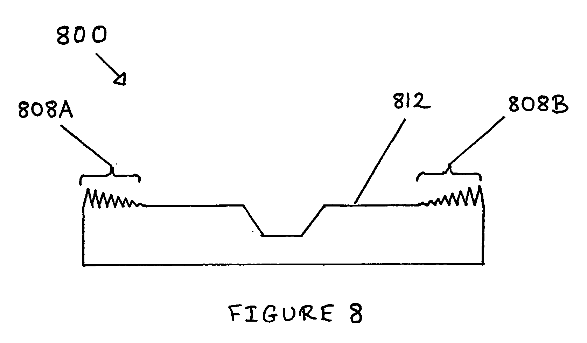

In contrast to the half bearing 100 of Figure 1, the half bearing 800 of Figure 8 differs in that the ridges of the micro-profiled seal regions 808A and 808B do not have a uniform height across the width of each seal region. Rather the heights of the seal ridges of the micro-profiled seal regions 808A and 808B increase uniformly away from the bearing surface 812 (i.e. linearly increasing radial ridge height), such that the level of the seal ridge peaks above the bearing surface increases away from the bearing surface. The maximum height may be between 8 and 50µm in height. The heights of the ridges may taper up from a minimum height of zero. The bottoms of the valleys between the seal ridges of the micro-profiled seal regions 808A and 808B are level with the bearing surface 812.

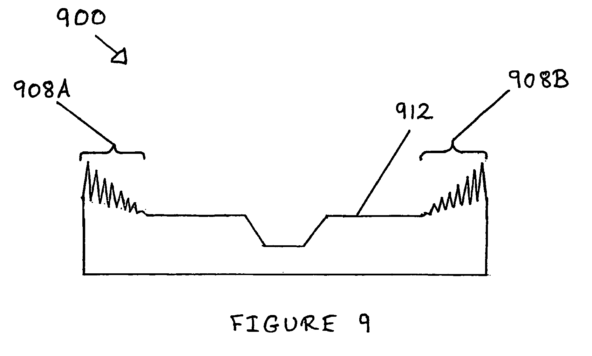

In contrast to the half bearing 800 of Figure 8, the half bearing 900 of Figure 9 differs in that the bottoms of the valleys of the ridges of the micro-profiled seal regions 908A and 908B are not level with the bearing surface 912. Rather, the bottoms of the valleys between the ridges of the micro-profiled seal regions 908A and 908B are successively raised above the level of the bearing surface 912 away from the bearing surface and towards the axial ends of the half bearing 900.

The operation of the half bearings 700, 800 and 900 are substantially the same as that of the half bearing 100 of the first embodiment. Accordingly, advantages of the first embodiment are also provided by the third, fourth and fifth embodiments.

The formation of a micro-profiled seal region that projects further above the bearing surface than is required for long-term operation (e.g. the top of the micro-profiled seal region is raised above the level of the bearing surface), provides a half bearing in which the ridges of the micro-profiled regions may be worn to size in initial use, in accordance with the particular dimensions of the crankshaft journal running within the associated bearing assembly. Accordingly the micro-profiled seal region can advantageously compensate for manufacturing and assembly tolerances, such as misalignment between the crankshaft journal and the bearing, since the ridges are worn to shape by the crankshaft journal to provide a uniquely optimised seal. This simplifies manufacturing, reduces manufacturing cost.

Further, advantageously the half bearing of the present invention provides wider tolerances for the bearing member and/or the running crankshaft journal, reducing manufacturing complexity and cost, reducing risk of seizure, and providing a greater sealing effect over the operational lifetime of an engine. Yet further, advantageously, wear-inducing particulate within the lubrication oil can be entrapped within the valleys between the ridges of the micro-profiled regions, reducing engine wear and prolonging engine operational lifetime.
Advantageously, the half bearing of the present invention is simple and inexpensive to manufacture. Further, the formation of the micro-profiled seal regions on the bearing member provides single component half bearings, with the corresponding advantages of reduced inventory for suppliers, and simplicity of assembly for customers, as well as reduced cost and improved reliability, compared with prior multi-component half bearings. Further, having reduced assembly complexity, provides increased assembly yield. Yet, further advantageously, the present embodiments permit the half bearing to be manufactured from a bi-layer metal system, being only the metal layers of the external backing layer and the bearing lining layer, which enables less complex manufacturing than for prior, tri-layer, metal half bearings.
Advantageously, since the micro-profiled seal regions provide reduced oil flow axially out from within the clearance between the crankshaft journal and the bearing surface, a higher proportion of the volume of oil flowing into the main bearings is conserved, whilst still retaining adequate lubrication and pressure, and accordingly, it is possible to utilise a smaller capacity oil pump, which may also be both physically smaller and lighter.
Advantageously, by selectively providing the bearing half only adjacent the axial ends of the inner face of the half bearing, with lubricant within the clearance between the bearing surface and the crankshaft journal, the main, central part of the crankshaft journal runs upon the bearing surface which is optimised for the purpose with respect to its material composition and its design, whilst also having the oil retaining advantage of the micro-profiled seal regions.
The figures provided herein are schematic and not to scale.

## Claims

1. A half bearing (100, 400, 700, 800, 900) comprising a bearing member (102, 102', 402, 702) having at least an internal bearing lining layer (106, 106', 706) with an optional bearing overlay layer defining a concave inner face extending between first and second axial ends (110A, 110B) of the half bearing (100, 400, 700, 800, 900), wherein the concave inner face comprises a concave substantially semi-cylindrical bearing surface (112, 112', 412, 712, 812, 912) and at least first and second micro-profiled seal regions (108A, 108B; 108A', 108 B', 408A(i), 408A(ii); 708A, 708B; 808A, 808B; 908A, 908B),
wherein each of the first and second micro-profiled seal regions (108A, 108B; 108A', 108 B', 408A(i), 408A(ii); 708A, 708B; 808A, 808B; 908A, 908B) comprise a plurality of seal ridges and peaks of the seal ridges project above the concave bearing surface (112, 112', 412, 712, 812, 912), and the micro-profiled seal regions (108A, 108B; 108A', 108 B', 408A(i), 408A(ii); 708A, 708B; 808A, 808B; 908A, 908B) extend at least partially circumferentially across the concave inner face,
wherein the first and second micro-profiled seal regions (108A, 108B; 108A', 108 B', 408A(i), 408A(ii); 708A, 708B; 808A, 808B; 908A, 908B) are at or adjacent to the first and second axial ends (110A, 110B), **characterized in that** the seal ridges have a repeat period of 300 to 700 µm, a ridge height of 12 to 30 µm and that each micro-profiled seal region has a width of 200 to 600 µm.

2. A half bearing according to claim 1, **characterized in that** the bearing member (102') comprises circumferential raised regions (107') of the inner face, with the micro-profiled seal regions (108A', 108 B') being provided on the raised regions (107').

3. A half bearing according to claim 1, **characterized in that** the bearing member
(102) has joint faces (113A, 113B) and the micro-profiled seal regions (108A, 108B) extend around substantially the whole of the concave inner face between the joint faces (113A, 113B).

4. A half bearing according to claim 1, **characterized in that** the micro-profiled seal regions (808A, 808B; 908A, 908B) project above the bearing surface by a greater extent in regions at or adjacent the joint faces than in a region spaced front the joint faces.

5. A half bearing according to claim 1, **characterized in that** the bearing member has joint faces and the micro-profiled seal regions extend around a portion of the concave inner face spaced from the joint faces.

6. A half bearing according to claim 1, **characterized in that** the bearing member (402) has joint faces and the micro-profiled seal regions (408A(i), 408A(ii)) extend around a portion of the concave inner face terminating adjacent to the joint faces.

7. A half bearing according to claim 1, **characterized in that** the concave inner face is provided with at least one further micro-profiled seal region (750) intermediate the first and second micro-profiled seal regions (708A, 708B).

8. A half bearing according to claim 7, **characterized in that** the bearing surface (712) is a micro-profiled bearing surface comprising a micro-profiled bearing surface region (750) having a plurality of bearing surface ridges, and the peaks of the seal ridges project above peaks of the bearing surface ridges.

9. A half bearing according to claim 1, **characterized in that** the micro-profiled seal regions (808A, 808B; 908A, 908B) each comprise seal ridges having a monotonic variation in height across the region.

10. A half bearing according to claim 1, **characterized in that** the micro-profiled seal regions comprise seal ridges with intervening seal valleys, and bottoms of the seal valleys are level with the bearing surface or above the level of the bearing surface.

11. A half bearing according to claim 1, **characterized in that** the micro-profiled seal regions comprise seal ridges with intervening seal valleys, and bottoms of the seal valleys having increasing height above the level of the bearing surface with increasing distance from the bearing surface.

12. A half bearing according to claim 1, **characterized in that** the micro-profiled regions comprise a repeating pattern of circumferential or helically arranged ridges.

13. A half bearing according to claim 1, **characterized in that** an oil supply hole (114) and an oil distribution groove (116) is are provided in the inner face, both being located intermediate the first and second micro-profiled seal regions.

14. A half bearing according to claim 1, **characterized in that** micro-profiled regions are formed in a separate layer deposited on the bearing surface.

15. A 360° engine bearing assembly (117) comprising a first half bearing (100, 400, 700, 800, 900) according to any one preceding claim and a second half bearing (120), **characterized in that** the first half bearing (100, 400, 700, 800, 900) is retained in an engine block main bearing housing (118) and that the second half bearing (120) is retained in a main bearing cap housing (122).

16. A 360° engine bearing assembly according to claim 15, **characterized in that** the second half bearing (120) is a plain half bearing.

17. A 360° engine bearing assembly according to claim 15 **characterized in that** the second half bearing is a half bearing according to any one of claims 1 to 14.

18. A method of manufacturing a half bearing (100, 400, 700, 800, 900) comprising a bearing member (102, 102', 402, 702) having at least an internal bearing lining layer (106, 106', 706) with an optional bearing overlay layer defining a concave inner face extending between first and second axial ends (110A, 110B) of the half bearing (100, 400, 700, 800, 900), wherein the concave inner face comprises a concave substantially semi-cylindrical bearing surface (112, 112', 412, 712, 812, 912) and at least first and second micro-profiled seal regions (108A, 108B; 108A', 108 B', 408A(i), 408A(ii); 708A, 708B; 808A, 808B; 908A, 908B) that each comprise a plurality of seal ridges, wherein the first and second micro-profiled seal regions (108A, 108B; 108A', 108 B', 408A(i), 408A(ii); 708A, 708B; 808A, 808B; 908A, 908B) are at or adjacent to the first and second axial ends (110A, 110B) of the inner face, and peaks of the seal ridges project above the concave bearing surface (112, 112', 412, 712, 812, 912) and the micro-profiled seal regions (108A, 108B; 108A', 108 B', 408A(i), 408A(ii); 708A, 708B; 808A, 808B; 908A, 908B) extend at least partially circumferentially across the concave inner face ,**characterized in that** the seal ridges have a repeat period of 300 to 700 µm, a ridge height of 12 to 30 µm and that each micro-profiled seal region has a width of 200 to 600 µm, and **in that** the micro-profiles are formed by machining with a boring tool or by tapping using a thread-cutting tapping tool or by etching through a lithographic mask or by deposition of a micro-profile layer and lift-off with a lithographic mask.

## Patentansprüche

1. Ein Halblager (100, 400, 700, 800, 900) aufweisend ein Lagerglied (102, 102', 402, 702), das mindestens eine innere Lagergleitschicht (106, 106', 706) mit einer optionale Lagerüberzugsschicht hat, die eine konkave innere Fläche definiert, welche sich zwischen ersten und zweiten axialen Enden (110A, 110B) des Halblagers (100, 400, 700, 800, 900) erstreckt, wobei die konkave innere Fläche eine konkave, im Wesentlichen halbkreisförmige Lageroberfläche (112, 112', 412, 712, 812, 912) und mindestens erste und zweite mikroprofilierte Dichtungsregionen (108A, 108B; 108A', 108B', 408A(i), 408A(ii); 708A, 708B; 808A, 808B; 908A, 908B) aufweist, wobei jede der ersten und zweiten mikroprofilierten Dichtungsregionen (108A, 108B; 108A', 108B', 408A(i), 408A(ii); 708A, 708B; 808A, 808B; 908A, 908B) eine Mehrzahl von Dichtungskämmen aufweisen und Höhepunkte der Dichtungskämme über die konkave Lageroberfläche (112, 112', 412, 712, 812, 912) hervorstehen, und die mikroprofilierten Dichtungsregionen (108A, 108B; 108A', 108B', 408A(i), 408A(ii); 708A, 708B; 808A, 808B; 908A, 908B) sich mindestens teilweise umfänglich über die konkave innere Fläche erstrecken, wobei die ersten und zweiten mikroprofilierten Dichtungsregionen (108A, 108B; 108A', 108B', 408A(i), 408A(ii); 708A, 708B; 808A, 808B; 908A, 908B) an den oder benachbart zu den ersten und zweiten axialen Enden (110A, 110B) sind,
**dadurch gekennzeichnet, dass** die Dichtungskämme eine Wiederholungsperiode von 300 bis 700 µm und eine Kammhöhe von 12 bis 30 µm haben und dass jede mikroprofilierte Dichtungsregion eine Breite von 200 bis 600 µm hat.

2. Ein Halblager nach Anspruch 1, **dadurch gekennzeichnet, dass** das Lagerglied (102') umfänglich erhöhte Regionen (107') der inneren Fläche aufweist, wobei die mikroprofilierten Dichtungsregionen (108A', 108B') auf den erhöhten Regionen (107') bereitgestellt sind.

3. Ein Halblager nach Anspruch 1, **dadurch gekennzeichnet, dass** das Lagerglied (102) Stoßflächen (113A, 113B) hat und die mikroprofilierten Dichtungsregionen (108A, 108B) sich um im Wesentlichen die gesamte konkave innere Fläche zwischen den Stoßflächen (113A, 113B) erstrecken.

4. Ein Halblager nach Anspruch 1, **dadurch gekennzeichnet, dass** die mikroprofilierten Dichtungsregionen (808A, 808B; 908A, 908B) über die Lageroberfläche in Regionen an oder benachbart zu Stoßflächen weiter hervorstehen als in einer Region, die von den Stoßflächen beabstandet ist.

5. Ein Halblager nach Anspruch 1, **dadurch gekennzeichnet, dass** sich bei dem Lagerglied Stoßflächen und die mikroprofilierten Dichtungsregionen um einen Bereich der konkaven inneren Fläche herum erstrecken, der von den Stoßflächen beabstandet ist,

6. Ein Halblager nach Anspruch 1, **dadurch gekennzeichnet, dass** sich bei dem Lagerglied (402) Stoßflächen und die mikroprofilierten Dichtungsregionen (408A(i), 408A(ii)) um einen Bereich der konkaven inneren Fläche herum erstrecken, der benachbart zu den Stoßflächen endet.

7. Ein Halblager nach Anspruch 1, **dadurch gekennzeichnet, dass** die konkave innere Fläche mit mindestens einer weiteren mikroprofilierten Dichtungsregion (750) bereitgestellt ist, die den ersten und zweiten mikroprofilierten Dichtungsregionen (708A, 708B) zwischengesetzt ist.

8. Ein Halblager nach Anspruch 7, **dadurch gekennzeichnet, dass** die Lageroberfläche(712) eine mikroprofilierte Lageroberfläche ist, die eine mikroprofilierte Lageroberflächenregion (750) aufweist, welche eine Mehrzahl von Lageroberflächenkämmen hat, und die Höhepunkte der Dichtungskämme über Höhepunkte der Lageroberflächenkämme hervorstehen.

9. Ein Halblager nach Anspruch 1, **dadurch gekennzeichnet, dass** die mikroprofilierten Dichtungsregionen (808A, 808B; 908A, 908B) jeweils Dichtungskämme aufweisen, die über die Region eine monotonische Variation in der Höhe haben.

10. Ein Halblager nach Anspruch 1, **dadurch gekennzeichnet, dass** die mikroprofilierten Dichtungsregionen Dichtungskämme mit intervenierenden Dichtungstälern aufweisen und Böden der Dichtungstäler auf gleichem Niveau mit der Lageroberfläche oder über dem Niveau der Lageroberfläche liegen.

11. Ein Halblager nach Anspruch 1, **dadurch gekennzeichnet, dass** die mikroprofilierten Dichtungsregionen Dichtungskämme mit intervenierenden Dichtungstälern aufweisen und Böden der Dichtungstäler oberhalb des Niveaus der Lageroberfläche mit ansteigendem Abstand von der Lageroberfläche ansteigende Höhen haben.

12. Ein Halblager nach Anspruch 1, **dadurch gekennzeichnet, dass** die mikroprofilierten Regionen ein sich wiederholendes Muster von umfänglichen oder spiralförmig angeordneten Kämmen aufweisen.

13. Ein Halblager nach Anspruch 1, **dadurch gekennzeichnet, dass** ein Ölversorgungsloch (114) und eine Ölverteilungsnut (116) in der inneren Fläche bereitgestellt sind, wobei beides sich den ersten und zweiten mikroprofilierten Dichtungsregionen zwischengesetzt befindet.

14. Ein Halblager nach Anspruch 1, **dadurch gekennzeichnet, dass** mikroprofilierte Regionen in einer separaten Schicht geformt sind, die auf der Lageroberfläche abgeschieden ist.

15. Eine 360° Motorlagerbaugruppe (117), aufweisend ein erstes Halblager (100, 400, 700, 800, 900) nach irgendeinem voranstehenden Anspruch und ein zweites Halblager (120), **dadurch gekennzeichnet, dass** das erste Halblager (100, 400, 700, 800, 900) in einem Hauptlagergehäuse des Motorblocks (118) bewahrt ist und dass das zweite Halblager (120) in einem Hauptlagerkappengehäuse (122) bewahrt ist.

16. Eine 360° Motorlagerbaugruppe nach Anspruch 15, **dadurch gekennzeichnet, dass** das zweite Halblager (120) ein schlichtes Halblager ist.

17. Eine 360° Motorlagerbaugruppe nach Anspruch 15, **dadurch gekennzeichnet, dass** das zweite Halblager (120) ein Halblager nach einem der Ansprüche 1 bis 14 ist.

18. Ein Verfahren zum Herstellen eines Halblagers (100, 400, 700, 800, 900) aufweisend ein Lagerglied (102, 102', 402, 702), das mindestens eine innere Lagergleitschicht (106, 106', 706) mit einer optionale Lagerüberzugsschicht hat, die eine konkave innere Fläche definiert, welche sich zwischen ersten und zweiten axialen Enden (110A, 110B) des Halblagers (100, 400, 700, 800, 900) erstreckt, wobei die konkave innere Fläche eine konkave, im Wesentlichen halbkreisförmige Lageroberfläche (112, 112', 412, 712, 812, 912) und mindestens erste und zweite mikroprofilierte Dichtungsregionen (108A, 108B; 108A', 108B', 408A(i), 408A(ii); 708A, 708B; 808A, 808B; 908A, 908B) aufweist, die jeweils eine Mehrzahl von Dichtungskämmen aufweisen, wobei die ersten und zweiten mikroprofilierten Dichtungsregionen (108A, 108B; 108A', 108B', 408A(i), 408A(ii); 708A, 708B; 808A, 808B; 908A, 908B) an den oder benachbart zu den ersten und zweiten axialen Enden (110A, 110B) der inneren Fläche sind und Höhepunkte der Dichtungskämme über die konkave Lageroberfläche (112, 112', 412, 712, 812, 912) hervorstehen, und die mikroprofilierten Dichtungsregionen (108A, 108B; 108A', 108B', 408A(i), 408A(ii); 708A, 708B; 808A, 808B; 908A, 908B) sich mindestens teilweise umfänglich über die konkave innere Fläche erstrecken,
**dadurch gekennzeichnet, dass** die Dichtungskämme eine Wiederholungsperiode von 300 bis 700 µm und eine Kammhöhe von 12 bis 30 µm haben und dass jede mikroprofilierte Dichtungsregion eine Breite von 200 bis 600 µm hat, und
dadurch, dass die Mikroprofile maschinell mit einem Bohrwerkzeug oder durch Schneiden unter Verwendung eines gewindeschneidenden Schneidwerkzeugs oder durch Ätzen durch eine lithografische Maske oder durch Abscheiden einer mikroprofilierten Schicht und Abheben mit einer lithografischen Maske geformt werden.

## Revendications

1. Demi-coussinet (100, 400, 700, 800, 900) comprenant un élément formant coussinet (102, 102', 402, 702) ayant au moins une couche de revêtement d'antifriction interne (106, 106', 706) avec une couche de recouvrement de coussinet facultative définissant une face intérieure concave s'étendant entre des première et seconde extrémités axiales (110A, 110B) du demi-coussinet (100, 400, 700, 800, 900), dans lequel la face intérieure concave comprend une surface portante semi-cylindrique sensiblement concave (112, 112', 412, 712, 812, 912) et au moins des première et seconde régions d'étanchéité à micro-profil (108A, 108B ; 108A', 108B', 408A(i), 408A(ii) ; 708A, 708B ; 808A, 808B ; 908A, 908B), dans lequel chacune des première et seconde régions d'étanchéité à micro-profil (108A, 108B ; 108A', 108B', 408A(i), 408A(ii) ; 708A, 708B ; 808A, 808B ; 908A, 908B) comprennent une pluralité d'arêtes d'étanchéité, et des pics des arêtes d'étanchéité dépassent au-dessus de la surface portante concave (112, 112', 412, 712, 812, 912), et les régions d'étanchéité à micro-profil (108A, 108B ; 108A', 108B', 408A(i), 408A(ii) ; 708A, 708B ; 808A, 808B ; 908A, 908B) s'étendent au moins partiellement de manière circonférentielle d'un bout à l'autre de la face intérieure concave,
dans lequel les première et seconde régions d'étanchéité à micro-profil (108A, 108B ; 108A', 108B', 408A(i), 408A(ii) ; 708A, 708B ; 808A, 808B ; 908A, 908B) sont au niveau ou adjacentes aux première et seconde extrémités axiales (110A, 110B), **caractérisé en ce que** les arêtes d'étanchéité ont une période de répétition de 300 à 700 µm, une hauteur d'arête de 12 à 30 µm et **en ce que** chaque région d'étanchéité à micro-profil a une largeur de 200 à 600 um.

2. Demi-coussinet selon la revendication 1, **caractérisé en ce que** l'élément formant coussinet (102') comprend des régions élevées circonférentielles (107') de la face intérieure, les régions d'étanchéité à micro-profil (108A', 108B') étant disposées sur les régions élevées (107').

3. Demi-coussinet selon la revendication 1, **caractérisé en ce que** l'élément formant coussinet (102) a des faces de joint (113A, 1138) et les régions d'étanchéité à micro-profil (108A, 108B) s'étendent sensiblement autour de la totalité de la face intérieure concave entre les faces de joint (113A, 113B).

4. Demi-coussinet selon la revendication 1, **caractérisé en ce que** les régions d'étanchéité à micro-profil (808A, 808B ; 908A, 908B) dépassent au-dessus de la surface portante d'une mesure plus grande dans des régions au niveau ou adjacentes aux faces de joint que dans une région espacée devant les faces de joint.

5. Demi-coussinet selon la revendication 1, **caractérisé en ce que** l'élément formant coussinet a des faces de joint et les régions d'étanchéité à micro-profil s'étendent autour d'une partie de la face intérieure concave espacée des faces de joint.

6. Demi-coussinet selon la revendication 1, **caractérisé en ce que** l'élément formant coussinet (402) a des faces de joint et les régions d'étanchéité à micro-profil (408A(i), 408A(ii)) s'étendent autour d'une partie de la face intérieure concave se terminant adjacente aux faces de joint.

7. Demi-coussinet selon la revendication 1, **caractérisé en ce que** la face intérieure concave est munie d'au moins une région d'étanchéité à micro-profil supplémentaire (750) intermédiaire aux première et seconde régions d'étanchéité à micro-profil (708A, 708B).

8. Demi-coussinet selon la revendication 7, **caractérisé en ce que** la surface portante (712) est une surface portante à micro-profil comprenant une région de surface portante à micro-profil (750) ayant une pluralité d'arêtes de surface portante, et les pics des arêtes d'étanchéité dépassent au-dessus des pics des arêtes de surface portante.

9. Demi coussinet selon la revendication 1, **caractérisé en ce que** les régions d'étanchéité à micro-profil (808A, 808B ; 908A, 908B) comprennent chacune des arêtes d'étanchéité ayant une variation monotone de hauteur d'un bout à l'autre de la région.

10. Demi-coussinet selon la revendication 1, **caractérisé en ce que** les régions d'étanchéité à micro-profil comprennent des arêtes d'étanchéité avec des creux d'étanchéité intercalaires, et les fonds des creux d'étanchéité sont de niveau avec la surface portante ou au-dessus du niveau de la surface portante.

11. Demi-coussinet selon la revendication 1, **caractérisé en ce que** les régions d'étanchéité à micro-profil comprennent des arêtes d'étanchéité avec des creux d'étanchéité intercalaires, et les fonds des creux d'étanchéité ayant une hauteur croissante au-dessus du niveau de la surface portante avec une distance croissante depuis la surface portante.

12. Demi-coussinet selon la revendication 1, **caractérisé en ce que** les régions à micro-profil comprennent un motif répétitif d'arêtes circonférentielles ou agencées en hélice.

13. Demi-coussinet selon la revendication 1, **caractérisé en ce qu'**un trou d'alimentation en huile (114) et une rainure de distribution d'huile (116) sont disposés dans la face intérieure, les deux étant situés de façon intermédiaire aux première et seconde régions d'étanchéité à micro-profil.

14. Demi-coussinet selon la revendication 1, **caractérisé en ce que** des régions à micro-profil sont formées dans une couche distincte déposée sur la surface portante.

15. Ensemble coussinet à 360° (117) pour moteur comprenant un premier demi-coussinet (100, 400, 700, 800, 900) selon l'une quelconque des revendications précédentes et un second demi-coussinet (120), **caractérisé en ce que** le premier demi-coussinet (100, 400, 700, 800, 900) est retenu dans un logement (118) de coussinet principal de bloc-moteur et **en ce que** le second demi-coussinet (120) est retenu dans un logement de chapeau de coussinet principal (122).

16. Ensemble coussinet à 360° pour moteur selon la revendication 15, **caractérisé en ce que** le second demi-coussinet (120) est un demi-coussinet lisse.

17. Ensemble coussinet à 360° pour moteur selon la revendication 15, **caractérisé en ce que** le second demi-coussinet est un demi-coussinet selon l'une quelconque des revendications 1 à 14.

18. Procédé de fabrication d'un demi-coussinet (100, 400, 700, 800, 900) comprenant un élément formant coussinet (102, 102', 402, 702) ayant au moins une couche de revêtement d'antifriction interne (106, 106', 706) avec une couche de recouvrement de coussinet facultative définissant une face intérieure concave s'étendant entre des première et seconde extrémités axiales (110A, 110B) du demi-coussinet (100, 400, 700, 800, 900), dans lequel la face intérieure concave comprend une surface portante semi-cylindrique sensiblement concave (112, 112', 412, 712, 812, 912) et au moins des première et seconde régions d'étanchéité à micro-profil (108A, 108B ; 108A', 108B', 408A(i), 408A(ii) ; 708A, 708B ; 808A, 808B ; 908A, 908B) qui comprennent chacune une pluralité d'arêtes d'étanchéité, dans lequel les première et seconde régions d'étanchéité à micro-profil (108A, 108B ; 108A', 108B', 408A(i), 408A(ii) ; 708A, 708B ; 808A, 808B ; 908A, 908B) sont au niveau ou adjacentes aux première et seconde extrémités axiales (110A, 110B) de la face intérieure, et des pics des arêtes d'étanchéité dépassent au-dessus de la surface portante concave (112, 112', 412, 712, 812, 912), et les régions d'étanchéité à micro-profil (108A, 108B ; 108A', 108B', 408A(i), 408A(ii) ; 708A, 708B ; 808A, 808B ; 908A, 908B) s'étendent au moins partiellement de manière circonférentielle d'un bout à l'autre de la face intérieure concave, **caractérisé en ce que** les arêtes d'étanchéité ont une période de répétition de 300 à 700 µm, une hauteur d'arête de 12 à 30 µm et **en ce que** chaque région d'étanchéité à micro-profil a une largeur de 200 à 600 µm, et **en ce que** les micro-profils sont formés par usinage avec un outil à aléser ou par taraudage en utilisant une taraudeuse à fileter ou par gravure à travers un masque lithographique ou par dépôt d'une couche de micro-profil et décollement avec un masque lithographique.
